(19) Europäisches Patentamt
European Patent Office
Office européen des brevets

(11) **EP 4 435 679 A1**

(12) **EUROPEAN PATENT APPLICATION**
published in accordance with Art. 153(4) EPC

(43) Date of publication:
**25.09.2024 Bulletin 2024/39**

(51) International Patent Classification (IPC):
**G06N 20/00** (2019.01)

(21) Application number: **22909967.6**

(52) Cooperative Patent Classification (CPC):
**G06F 18/214; G06N 3/044; G06N 3/0464;
G06N 3/0499; G06N 3/08; G06N 20/00;
H04B 17/391**

(22) Date of filing: **20.12.2022**

(86) International application number:
**PCT/CN2022/140221**

(87) International publication number:
**WO 2023/116655 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021 CN 202111564623**

(71) Applicant: **Huawei Technologies Co., Ltd.
Shenzhen, Guangdong 518129 (CN)**

(72) Inventors:
• **CHAI, Xiaomeng**
  **Shenzhen, Guangdong 518129 (CN)**
• **SUN, Yan**
  **Shenzhen, Guangdong 518129 (CN)**
• **SUN, Yaqi**
  **Shenzhen, Guangdong 518129 (CN)**
• **WU, Yiqun**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS**

(57)    This disclosure provides a communication method and apparatus, to reduce transmission overheads of training data and improve performance of an artificial intelligence model. The method includes: obtaining first data and first information from a first node, where the first information indicates a data augmentation manner of the first data; and determining a first training dataset of a model based on the first data and the first information.

FIG. 4

**EP 4 435 679 A1**

**Description**

**CROSS-REFERENCE TO RELATED APPLICATIONS**

This application claims priority to Chinese Patent Application No. 202111564623.8, filed with the China National Intellectual Property Administration on December 20, 2021 and entitled "COMMUNICATION METHOD AND APPARATUS", which is incorporated herein by reference in its entirety.

**TECHNICAL FIELD**

This disclosure relates to the field of communication technologies, and in particular, to a communication method and apparatus.

**BACKGROUND**

In a wireless communication network, for example, in a mobile communication network, services supported by the network are increasingly diversified, and therefore requirements that need to be met are increasingly diversified. For example, the network needs to be able to support ultra-high rates, ultra-low delays, and/or ultra-large connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operation and maintenance, and efficient operation. To meet this challenge, an artificial intelligence technology may be introduced into the wireless communication network, to implement network intelligence. Based on this, how to effectively implement artificial intelligence in a network is a problem worth studying.

**SUMMARY**

This disclosure provides a communication method and apparatus, to reduce transmission overheads of training data and improve performance of an artificial intelligence model.

According to a first aspect, this disclosure provides a communication method, including: obtaining first data from a first node, and determining a first training dataset of a model based on the first data and a data augmentation manner of the first data. Optionally, the data augmentation manner of the first data may be indicated by the first node. For example, the communication method may alternatively be understood as: obtaining first data and first information from a first node, where the first information indicates a data augmentation manner of the first data; and determining a first training dataset of a model based on the first data and the first information. Optionally, the data augmentation manner of the first data may be agreed on in a protocol.

The data augmentation manner of the first data may be understood as one or more data augmentation manners that match the first data, and the data augmentation manner may also be described as a data extension manner, a data processing manner, a data preprocessing manner, or another name.

In this design, a small amount of training data is transmitted, and training data actually used for model training is generated in the data augmentation manner. This can reduce overheads of training data transmission, and improve model training efficiency and performance.

In a possible design, the data augmentation manner of the first data is determined based on a type of the first data and/or a model application scenario, and the model application scenario may be further described as a scenario corresponding to first training data.

In a possible design, the first information includes one or more identifiers, and the identifier indicates the data augmentation manner of the first data.

In a possible design, the first information includes a parameter of the data augmentation manner of the first data.

In a possible design, the communication method further includes: sending second information to the first node, where the second information indicates at least one of the following: the type of the first data, a scenario corresponding to the first training dataset, a data amount of the first data, or a data augmentation manner supported by a second node, where the second node is used to train the model. In this design, the second information indicates a related requirement for obtaining the first data, to help obtain proper training data, in other words, improve validity of the model training data.

In a possible design, the type of the first data may include channel data.

In a possible design, the scenario corresponding to the first training dataset is used to determine a collection range of the first data. For example, the first data may be data in the scenario corresponding to the first dataset. In this example, the scenario corresponding to the first training dataset may also be described as a scenario corresponding to the first data.

In a possible design, the communication method further includes: obtaining second data from the first node, where the model is obtained through training based on the first training dataset, and the second data is used to perform update training on the model. Optionally, a trigger condition of the method includes: performance of the model does not meet a performance requirement, in other words, when the performance of the model does not meet the performance requirement, the second data is obtained from the first node. The first node may determine that the performance of the model does not meet the performance requirement, or a node that trains the model, for example, the second node, may determine that the performance of the model does not meet the performance requirement.

In a possible design, the obtaining second data from the first node may include: sending third information to the first node, where the third information indicates that the performance of the model does not meet the performance requirement, and/or the third information is used to request the second data; and receiving the second data from the first node.

In this design, the model training is first performed by using the training data obtained in the data augmentation manner, and then more training data is obtained for the update training of the model with reference to the performance of the model. This can further ensure the performance of the model when reducing the overheads of the training data transmission.

In a possible design, the communication method further includes: obtaining, from the first node, information that indicates the performance requirement.

In a possible design, the method further includes: sending fourth information to the first node, where the fourth information is used to request the data augmentation manner of the first data.

In a possible design, the fourth information includes indication information of a first data augmentation manner; and the first information includes acknowledgment information, and the acknowledgment information indicates that the data augmentation manner of the first data includes the first data augmentation manner; or the first information includes negative acknowledgment information and indication information of a second data augmentation manner, the negative acknowledgment information indicates that the data augmentation manner of the first data does not include the first data augmentation manner; and the data augmentation manner of the first data includes the second data augmentation manner. In this design, the first node determines whether a data augmentation manner that is planned to use is applicable to the first data, and then indicates the data augmentation manner. This can ensure that the data augmentation manner that matches the first data is actually used, to help improve the performance of the model.

According to a second aspect, this disclosure provides a communication method, including: determining first data and first information, where the first information indicates a data augmentation manner of the first data; and sending the first data and the first information to a second node, where the first data and the first information are used to determine a first training dataset of a model.

For content descriptions of the data augmentation manner of the first data, refer to the first aspect. Details are not described herein again.

In a possible design, the method further includes: obtaining second information, where the second information indicates at least one of the following: a type of the first data, a scenario corresponding to the first training dataset, a data amount of the first data, or a data augmentation manner supported by the second node. The first data and the first information in the foregoing design may be determined by the second information.

For content descriptions of the type of the first data and the scenario corresponding to the first training dataset, refer to the first aspect. Details are not described herein again.

In a possible design, the method further includes: sending second data to the second node, where the second data is used to perform update training on the model. Specifically, when performance of the model does not meet a performance requirement, the second data may be sent to the second node. Optionally, the first node may determine that the performance of the model does not meet the performance requirement, or a node that trains the model, for example, the second node, may determine that the performance of the model does not meet the performance requirement.

In a possible design, before the sending second data to the second node, the method further includes: receiving third information from the second node, where the third information indicates that the performance of the model does not meet the performance requirement, and/or the third information is used to request the second data.

In a possible design, information that indicates the performance requirement is sent to the second node.

In a possible design, the method further includes: receiving fourth information from the second node, where the fourth information is used to request the data augmentation manner of the first data.

For content descriptions of the fourth information and the first information, refer to the first aspect. Details are not described herein again.

According to a third aspect, this disclosure provides a communication apparatus. The communication apparatus may be a second node, an apparatus in the second node, or an apparatus that may be used together with the second node. In a design, the communication apparatus may include modules that are in one-to-one correspondence with the method/operation/step/action described in the first aspect. The modules may be implemented by a hardware circuit, software, or a combination of the hardware circuit and software. In a design, the communication apparatus may include a processing module and a communication module.

In an example, the communication module is configured to obtain first data from a first node; and the processing module is configured to determine a first training dataset of a model based on the first data and a data augmentation manner of the first data.

Specifically, the data augmentation manner of the first data may be indicated by the first node. In another example, the communication module is configured to obtain first data and first information from a first node, where the first information indicates a data augmentation manner of the first data; and the processing module is configured to determine a first training dataset of a model based on the first data and the first information.

Specifically, the data augmentation manner of the first data may be agreed on in a protocol.

In a possible design, the communication module is further configured to send second information to the first node, where the second information indicates at least one of the following: a type of the first data, a scenario corresponding to the first training dataset, a data amount of the first data, or a data augmentation manner supported by a second node, where the second node is used to train the model.

In a possible design, the communication module is further configured to obtain second data from the first node, where the model is obtained through training based on the first training dataset, and the second data is used to perform update training on the model. Optionally, when performance of the model does not meet a performance requirement, the communication module is configured to obtain the second data from the first node. The first node may determine that the performance of the model does not meet the performance requirement, or a node that trains the model, for example, the second node, may determine that the performance of the model does not meet the performance requirement.

In a possible design, the communication module is further configured to: send third information to the first node, where the third information indicates that the performance of the model does not meet the performance requirement, and/or the third information is used to request the second data; and receive the second data from the first node.

In a possible design, the communication module is further configured to obtain, from the first node, information that indicates the performance requirement.

In a possible design, the communication module is further configured to: send fourth information to the first node, where the fourth information is used to request the data augmentation manner of the first data.

For content descriptions of the fourth information and the first information, refer to the first aspect. Details are not described herein again.

According to a fourth aspect, this disclosure provides a communication apparatus. The communication apparatus may be a first node, an apparatus in the first node, or an apparatus that may be used together with the first node. In a design, the communication apparatus may include modules that are in one-to-one correspondence with the method/operation/step/action described in the second aspect. The modules may be implemented by a hardware circuit, software, or a combination of the hardware circuit and software. In a design, the communication apparatus may include a processing module and a communication module. An example is as follows:

a processing module, configured to determine first data and first information, where the first information indicates a data augmentation manner of the first data; and
a communication module, configured to send the first data and the first information to a second node, where the first data and the first information are used to determine a first training dataset of a model.

In a possible design, the processing module is further configured to: obtain second information by using the communication module, where the second information indicates at least one of the following: a type of the first data, a scenario corresponding to the first training dataset, a data amount of the first data, or a data augmentation manner supported by the second node; and the communication module is further configured to determine the first data and the first information based on the second information.

In a possible design, the communication module is further configured to send second data to the second node, where the second data is used to perform update training on the model. Specifically, when performance of the model does not meet a performance requirement, the second data may be sent to the second node. Optionally, the first node may determine that the performance of the model does not meet the performance requirement, or a node that trains the model, for example, the second node, may determine that the performance of the model does not meet the performance requirement.

In a possible design, before sending the second data to the second node, the communication module is further configured to receive third information from the second node, where the third information indicates that the performance of the model does not meet the performance requirement, and/or the third information is used to request the second data.

In a possible design, the communication module is further configured to send, to the second node, information that indicates the performance requirement.

In a possible design, the communication module is further configured to receive fourth information from the second node, where the fourth information is used to request the data augmentation manner of the first data.

For content descriptions of the fourth information and the first information, refer to the first aspect. Details are not described herein again.

According to a fifth aspect, this disclosure provides a communication apparatus. The communication apparatus includes a processor, configured to implement the method according to the first aspect. The communication apparatus may further include a memory, configured to store instructions and data. The memory is coupled to the processor. When executing the instructions stored in the memory, the processor can implement the method described in the first aspect. The communication apparatus may further include a communication interface. The communication interface is used by the apparatus to communicate with another device. For example, the communication interface may be a transceiver, a circuit, a bus, a module, a pin, or another type of communication interface. In a possible design, the communication apparatus includes:

a memory, configured to store program instructions; and
a processor, configured to obtain first data from a first node through the communication interface, where
the processor is further configured to determine a first training dataset of a model based on the first data and a data augmentation manner of the first data.

In another possible design, the communication apparatus includes:

a memory, configured to store program instructions; and
a processor, configured to obtain first data and first information from a first node through the communication interface, where the first information indicates a data augmentation manner of the first data, where
the processor is further configured to determine a first training dataset of a model based on the first data and the first information.

According to a sixth aspect, this disclosure provides a communication apparatus. The communication apparatus includes a processor, configured to implement the method according to the second aspect. The communication apparatus may further include a memory, configured to store instructions and data. The memory is coupled to the processor. When executing the instructions stored in the memory, the processor can implement the method described in the second aspect. The communication apparatus may further include a communication interface. The communication interface is used by the apparatus to communicate with another device. For example, the communication interface may be a transceiver, a circuit, a bus, a module, a pin, or another type of communication interface. In a possible design, the communication apparatus includes:

a memory, configured to store program instructions; and
a processor, configured to determine first data and first information, where the first information indicates a data augmentation manner of the first data, where
the processor is further configured to send the first data and the first information to a second node through the communication interface, and the first data and the first information are used to determine a first training dataset of a model.

According to a seventh aspect, this disclosure provides a communication system, including the communication apparatus described in the third aspect or the fifth aspect, and the communication apparatus described in the fourth aspect or the sixth aspect.

According to an eighth aspect, this disclosure further provides a computer program. When the computer program is run on a computer, the computer is enabled to perform the method provided in the first aspect or the second aspect.

According to a ninth aspect, this disclosure further provides a computer program product, including instructions. When the instructions are run on a computer, the computer is enabled to perform the method provided in the first aspect or the second aspect.

According to a tenth aspect, this disclosure further provides a computer-readable storage medium, where the computer-readable storage medium stores a computer program or instructions. When the computer program or the instructions are run on a computer, the computer is enabled to perform the method provided in the first aspect or the second aspect.

According to an eleventh aspect, this disclosure further provides a chip. The chip is configured to read a computer program stored in a memory, to perform the method provided in the first aspect or the second aspect.

According to a twelfth aspect, this disclosure further provides a chip system. The chip system includes a processor, configured to support a computer apparatus in implementing the method provided in the first aspect or the second aspect. In a possible design, the chip system further includes a memory, and the memory is configured to store a program and data that are necessary for the computer apparatus. The chip system may include a chip, or may include a chip and another discrete component.

## BRIEF DESCRIPTION OF DRAWINGS

FIG. 1A and FIG. 1B are diagrams of structures of communication systems;
FIG. 2A is a diagram of a neuron structure;
FIG. 2B is a diagram of a layer relationship of a neural network;
FIG. 3A is a diagram of an AI application framework according to this disclosure;
FIG. 3B to FIG. 3E are diagrams of several network architectures;
FIG. 4 is a schematic flowchart of a communication method according to this disclosure;
FIG. 5A and FIG. 5B are diagrams of a channel flipping manner;
FIG. 6A and FIG. 6B are diagrams of a channel shift manner;
FIG. 7 is a diagram of a noise adding processing manner;
FIG. 8A and FIG. 8B are diagrams of a channel cross-replacement manner;
FIG. 9 and FIG. 10 are schematic flowcharts of communication methods according to this disclosure;
FIG. 11 is a diagram of a model training effect according to this disclosure; and
FIG. 12 and FIG. 13 are diagrams of structures of communication apparatuses according to this disclosure.

## DESCRIPTION OF EMBODIMENTS

To make the objectives, technical solutions, and advantages of this disclosure clearer, the following further describes this disclosure in detail with reference to the accompanying drawings.
This disclosure relates to at least one (item) indicating one or more (items). A plurality of (items) mean two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms such as first and second may be used in this disclosure to describe objects, these objects are not limited by these terms. These terms are merely used to distinguish the objects from each other.
Terms "including", "having", and any other variant thereof mentioned in descriptions of this disclosure are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this disclosure, terms such as "example" or "for example" are used to represent giving an example, an illustration, or a description. Any method or design scheme described as an "example" or "for example" in the examples of this disclosure should not be explained as being more preferred or having more advantages than another method or design scheme. To be precise, the word "example", "for example", or the like is intended to present a related concept in a specific manner.
The technologies provided in this disclosure may be applied to various communication systems. For example, the communication system may be a $3^{rd}$ generation ($3^{rd}$ generation, 3G) communication system (for example, a universal mobile telecommunications system (universal mobile telecommunications system, UMTS)), a $4^{th}$ generation ($4^{th}$ generation, 4G) communication system (for example, a long term evolution (long term evolution, LTE) system), a $5^{th}$ generation ($5^{th}$ generation, 5G) communication system, a worldwide interoperability for microwave access (worldwide interoperability for microwave access, WiMAX) or a wireless local area network (wireless local area network, WLAN) system, or a system integrating a plurality of systems, or a future communication system, for example, a 6G communication system. The 5G communication system may also be referred to as a new radio (new radio, NR) system.
A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. The network element is used as an example for description in this disclosure. For example, the communication system may include at least one terminal device and at least one access network device. The access network device may send a downlink signal to the terminal device, and/or the terminal device may send an uplink signal to the access network device. In addition, it may be understood that if the communication system includes a plurality of terminal devices, the plurality of terminal devices may send signals to each other, in other words, both a signal sending network element and a signal receiving network element may be terminal devices.

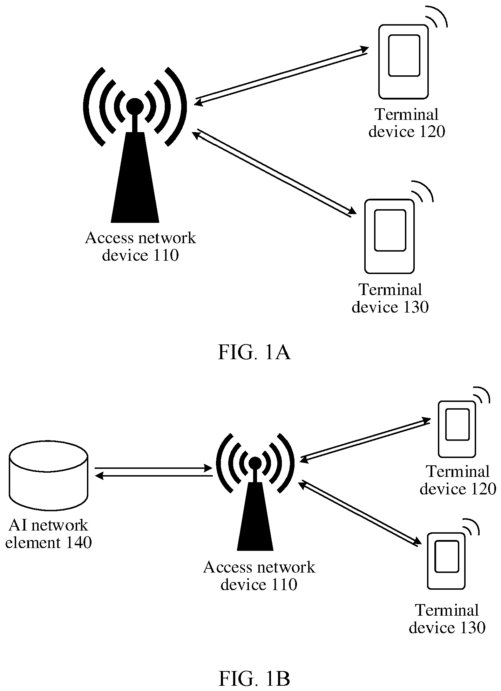

FIG. 1A shows a communication system. For example, the communication system includes an access network device 110 and two terminal devices, namely, a terminal device 120 and a terminal device 130. At least one of the terminal device 120 and the terminal device 130 may send uplink data to the access network device 110, and the access network device 110 may receive the uplink data. The access network device may send downlink data to at least one of the terminal device 120 and the terminal device 130.

The following describes in detail the terminal device and the access network device in FIG. 1A.

(1) Access network device

The access network device may be a base station (base station, BS). The access network device may also be referred to as a network device, an access node (access node, AN), or a radio access node (radio access node, RAN). The access network device may be connected to a core network (for example, an LTE core network or a 5G core network), and the access network device may provide a radio access service for the terminal device. The access network device includes but is not limited to, for example, at least one of the following: a next generation NodeB (generation NodeB, gNB) in 5G, an access network device in an open radio access network (open radio access network, O-RAN), or a module included in an access network device, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), and a baseband unit (baseband unit, BBU), a transmission reception point (transmitting and receiving point, TRP), a transmission point (transmitting point, TP), and/or a mobile switching center. Alternatively, the access network device may be a radio unit (radio unit, RU), a central unit (central unit, CU), a distributed unit (distributed unit, DU), a central unit control plane (CU control plane, CU-CP) node, or a central unit user plane (CU user plane, CU-UP) node. Alternatively, the access network device may be a relay station, an access point, a vehicle-mounted device, a wearable device, an access network device in a future evolved public land mobile network (public land mobile network, PLMN), or the like.

In this disclosure, the communication apparatus configured to implement a function of the access network device may be an access network device, or may be a network device having some functions of the access network device, or may be an apparatus that can support the access network device in implementing the function, for example, a chip system, a hardware circuit, a software module, or a hardware circuit plus a software module. The apparatus may be installed in the access network device or used in matching with the access network device. In the method in this disclosure, an example in which the communication apparatus configured to implement the function of the access network device is the access network device is used for description.

(2) Terminal device

The terminal device is also referred to as a terminal, user equipment (user equipment, UE), a mobile station (mobile station, MS), a mobile terminal (mobile terminal, MT), or the like. The terminal device may be a device that provides voice and/or data connectivity for a user. The terminal device may communicate with one or more core networks via an access network device. The terminal device includes a handheld device with a wireless connection function, another processing device connected to a wireless modem, a vehicle-mounted device, or the like. Alternatively, the terminal device may be a portable, pocket-sized, handheld, computer built-in, or vehicle-mounted mobile apparatus. Some examples of the terminal device are: a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), a wireless network camera, a mobile phone (mobile phone), a tablet computer, a notebook computer, a palmtop computer, a mobile internet device (mobile internet device, MID), a wearable device such as a smart watch, a virtual reality (virtual reality, VR) device, an augmented reality (augmented reality, AR) device, and a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal in a smart city (smart city), such as a smart fueler, a terminal device on a high-speed railway, and a wireless terminal in a smart home (smart home), such as a smart acoustic, a smart coffee machine, a smart printer, and the like.

In this disclosure, a communication apparatus configured to implement a function of the terminal device may be a terminal device, or may be a terminal device that has some functions of a terminal, or may be an apparatus that can support the terminal device in implementing the function, for example, a chip system. The apparatus may be installed in the terminal device or used in matching with the terminal device. In this disclosure, the chip system may include a chip, or may include a chip and another discrete component. In the technical solutions provided in this disclosure, an example in which a communication apparatus configured to implement a function of a terminal device is a terminal device or UE is used for description.

(3) Protocol layer structure between an access network device and a terminal device

Communication between the access network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and a terminal may further include an artificial intelligence (artificial intelligence, AI) layer, used to transmit data related to an AI function.

Data transmission between the access network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer, the MAC layer generates a transport block, and then wireless transmission is performed through the physical layer. Data is encapsulated accordingly at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

(4) Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on protocol layers of the radio network. For example, functions of the PDCP layer and protocol layers above the PDCP layer are disposed on the CU, and functions of protocol layers below the PDCP layer (for example, the RLC layer and the MAC layer) are disposed on the DU. For another example, functions of protocol layers above the PDCP layer are disposed on the CU, and functions of the PDCP layer and protocol layers below the PDCP layer are disposed on the DU.

It may be understood that the foregoing processing function division of the CU and the DU based on the protocol layers is merely an example, and there may be other division. For example, the CU or the DU may be obtained through division to have functions of more protocol layers. For another example, the CU or the DU may be obtained through division to have some processing functions of a protocol layer. In a design, a part of functions of the RLC layer and functions of protocol layers above the RLC layer are configured on the CU, and remaining functions of the RLC layer and functions of protocol layers below the RLC layer are configured on the DU. In another design, division of functions of the CU or the DU may alternatively be performed based on service types or other system requirements. For example, division may be performed based on latencies. Functions whose processing time needs to satisfy a delay requirement are set on the DU, and functions whose processing time does not need to satisfy the delay requirement are set on the CU. In another design, the CU may alternatively have one or more functions of the core network. For example, the CU may be disposed on a network side to facilitate centralized management. In another design, an RU of the DU is disposed remotely. The RU has a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When used for sending, a function of the PHY layer may include a cyclic redundancy check (cyclic redundancy check, CRC) code addition, channel coding, rate matching, scrambling, modulation, layer mapping, precoding, resource mapping, physical antenna mapping, and/or radio frequency sending function. When used for reception, a function of the PHY layer may include CRC, channel decoding, rate de-matching, descrambling, demodulation, layer de-mapping, channel detection, resource de-mapping, physical antenna de-mapping, and/or a radio frequency receiving function. The higher-layer function of the PHY layer may include a part of functions of the PHY layer. For example, the part of functions are closer to the MAC layer. The lower-layer function of the PHY layer may include another part of functions of the PHY layer. For example, the part of functions are closer to the radio frequency function. For example, the higher-layer function of the PHY layer may include CRC code addition, channel coding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel coding, rate matching, scrambling, modulation, layer mapping, and precoding. The lower-layer function of the PHY layer may include resource mapping, physical antenna mapping, and radio frequency sending functions.

For example, a function of the CU may be implemented by one entity, or may be implemented by different entities. For example, functions of the CU may be further divided, in other words, a control plane and a user plane are separated and implemented by different entities, which are a control plane CU entity (that is, a CU-CP entity) and a user plane CU entity (that is, a CU-UP entity). The CU-CP entity and the CU-UP entity may be coupled to the DU, to jointly complete the function of the access network device.

In the foregoing architecture, signaling generated by the CU may be sent to the terminal device by using the DU, or signaling generated by the terminal device may be sent to the CU by using the DU. For example, signaling at the RRC or PDCP layer is finally processed as signaling at the physical layer and sent to the terminal device, or is converted from signaling received from the physical layer. Based on such architectures, the signaling at the RRC layer or PDCP layer may be considered to be sent by using the DU, or sent by using the DU and the RU.

Optionally, any one of the DU, the CU, the CU-CP, the CU-UP, and the RU may be a software module, a hardware structure, or a combination of a software module and a hardware structure. This is not limited. Different entities may exist in different forms, which is not limited. For example, the DU, the CU, the CU-CP, and the CU-UP are software modules, and the RU is a hardware structure. These modules and methods performed by these modules also fall within the protection scope of this disclosure.

It should be understood that a quantity and types of devices in the communication system shown in FIG. 1A are merely used as an example, and this disclosure is not limited thereto. During actual application, the communication system may further include more terminal devices and more access network devices, and may further include another network element, for example, may include a core network device and/or a network element configured to implement an artificial intelligence function.

The method provided in this disclosure may be used for communication between the access network device and the terminal device, and may also be used for communication between other communication devices, for example, communication between a macro base station and a micro base station in a wireless backhaul link; for another example, communication between two terminal devices in a sidelink (sidelink, SL). This is not limited.

The method provided in this disclosure relates to artificial intelligence (artificial Intelligence, AI). The AI may be implemented by using various possible technologies, for example, by using a machine learning technology. In this disclosure, the foregoing communication system may also include a network element that implements an artificial intelligence function. For example, the AI function (for example, an AI module or an AI entity) may be configured in an existing network element in the communication system to implement an AI-related operation. For example, in a 5G new radio (new radio, NR) system, the existing network element may be an access network device (for example, a gNB), a terminal device, a core network device, a network management system, or the like. The network management system may classify network management work into three types based on actual requirements of a network operation of an operator: operation (Operation), administration (Administration), and maintenance (Maintenance). The network management system may also be referred to as an operation, administration, and maintenance (operation, administration, and maintenance, OAM) network element, which is referred to as OAM for short. The operation is mainly to complete daily work of analysis, prediction, planning, and configuration on a network and a service. The maintenance is mainly a daily operation activity such as testing or fault management performed on the network and the service of the network. The network management system can detect a network running status, optimize a network connection and performance, improve network running stability, and reduce network maintenance costs. Alternatively, an independent network element may be introduced in the communication system to perform the AI-related operation. The independent network element may be referred to as an AI network element, an AI node, or the like. A name of the network element is not limited in this disclosure. The AI network element may be directly connected to the access network device in the communication system, or may be indirectly connected to the access network device via a third-party network element. The third-party network element may be a core network element such as an authentication management function (authentication management function, AMF) network element or a user plane function (user plane function, UPF) network element, OAM, a cloud server, or another network element. This is not limited. For example, refer to FIG. 1B. An AI network element 140 is introduced to the communication system shown in FIG. 1A. A network element that performs the AI-related operation is a network element with a built-in AI function, or the foregoing AI network element. This is not limited in this disclosure. The AI-related operation may also be referred to as an AI function. For specific descriptions of the AI function, refer to the following.

For ease of understanding, the following describes some terms of the AI in this disclosure with reference to A1 to A3. It may be understood that the descriptions are not intended to limit this disclosure.

A1: AI model

The AI model is a specific implementation of the AI function. The AI model represents a mapping relationship between input and output of the model. The AI model may be a neural network, a linear regression model, a decision tree model, a support vector machine (support vector machine, SVM), a Bayesian network, a Q-learning model, or another machine learning model. In this disclosure, the AI function may include at least one of the following: data collection (collecting training data and/or inference data), data preprocessing, model training (or referred to as model learning), model information release (model information configuration), model validation, model inference, or inference result release. The inference may also be referred to as prediction. In this disclosure, the AI model may be referred to as a model for short.

A conventional communication system needs to design a communication module with rich expert knowledge. However, a deep learning communication system based on a machine learning technology (such as a neural network) can automatically discover an implicit pattern structure from a large quantity of datasets, establish a mapping relationship between data, and obtain performance better than that of a conventional modeling method.

A2: Neural network

The neural network is a specific implementation form of the AI or the machine learning technology. According to a universal approximation theorem, the neural network can theoretically approximate to any continuous function, so that the neural network has a capability of learning any mapping.

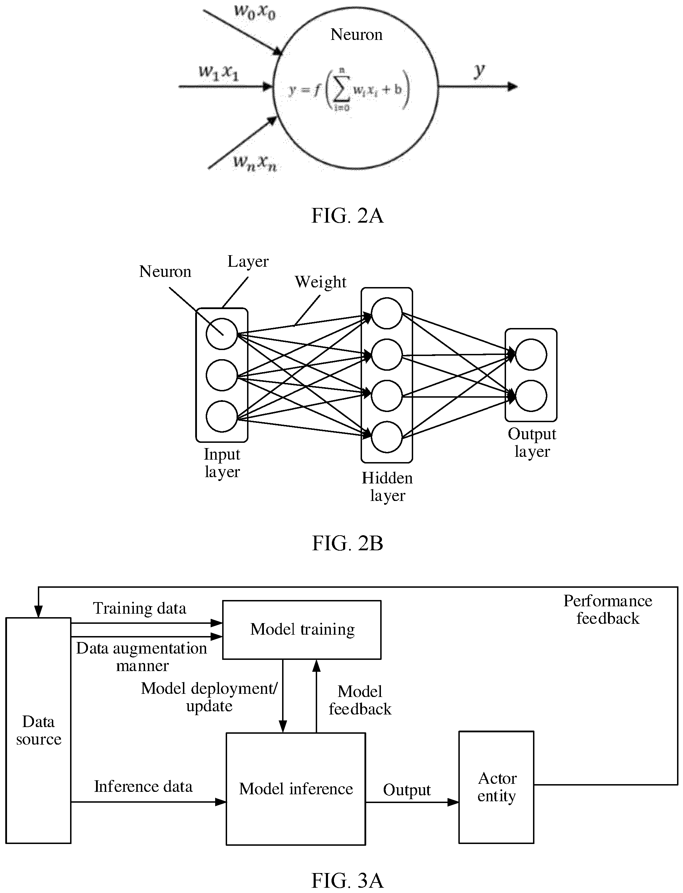

An idea of the neural network is from a neuron structure of brain tissue. For example, each neuron performs a weighted summation operation on an input value of the neuron, and outputs an operation result by using an activation function. FIG. 2A is a diagram of a neuron structure. It is assumed that input values of a neuron are $x = [x_0, x_1, \ldots, x_n]$, and weights corresponding to the input values are $w = [w, w_1, \ldots, w_n]$ respectively, where $w_i$ is a weight of $x_i$ and is used to weight $x_i$. An offset for performing weighted summation on the input values based on the weights is, for example, b. There may be a plurality of forms of the activation function. It is assumed that an activation function of a neuron is y = $f(z)$ = max(0, z), output of the neuron is $y = f\left(\sum_{i=0}^{i=n} w_i * x_i + b\right) = \max(0, \sum_{i=0}^{i=n} w_i * x_i + b)$. For another example, if an activation function of a neuron is y = $f(z)$ = z, output of the neuron is $y = f\left(\sum_{i=0}^{i=n} w_i * x_i + b\right) = \sum_{i=0}^{i=n} w_i * x_i + b$. b may be any possible value such as a decimal, an integer (for example, 0, a positive integer, or a negative integer), or a complex number. Activation functions of different neurons in the neural network may be the same or different.

The neural network generally includes a plurality of layers, and each layer may include one or more neurons. A depth and/or a width of the neural network can be increased, to improve an expression capability of the neural network, and provide a more powerful information extraction and abstraction modeling capability for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer, and the output layer obtains an output result of the neural network. In another implementation, the neural network includes an input layer, a hidden layer, and an output layer. Refer to FIG. 2B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or the adjacent hidden layer. Finally, the output layer obtains an output result of the neural network. One neural network may include one hidden layer, or include a plurality of hidden layers that are sequentially connected. This is not limited.

The neural network in this disclosure is, for example, a deep neural network (deep neural network, DNN). Based on a network construction manner, the DNN may include a feedforward neural network (feedforward neural network, FNN), a convolutional neural network (convolutional neural network, CNN), and a recurrent neural network (recurrent neural network, RNN).

A3: Training data and inference data

The training data may include the input of the AI model, or include the input and target output (a label) of the AI model, and is used for AI model training. For example, the training data includes a plurality of training samples, and each training sample is one time of input of the neural network. The training data may also be understood as a set of training samples, or referred to as a training dataset. The training dataset is one of important parts of machine learning. Model training essentially is to learn of some features of the training data, so that the output is as close as possible to the target output of the AI model. For example, a difference between the output and the target output of the AI model is as small as possible. The target output may also be referred to as a label. Composition and selection of the training dataset may determine performance of a trained AI model to some extent.

In addition, in a training process of the AI model (such as a neural network), a loss function may be defined. The loss function describes a difference between an output value and a target output value of the AI model. This disclosure does not limit a specific form of the loss function. The training process of the AI model is a process in which a parameter of the AI model is adjusted, so that a value of the loss function is less than a threshold, or the value of the loss function meets a target requirement. For example, the AI model is a neural network, and adjusting a parameter of the neural network includes adjusting at least one of the following parameters: a quantity of layers of the neural network, a width, a weight of a neuron, or a parameter in an activation function of the neuron.

The inference data may be used as input of the trained AI model, and is used for AI model inference. In a model inference process, the inference data is input to the AI model, and it may be obtained that corresponding output is an inference result.

A4: AI model design

The AI model design mainly includes a data collection phase (for example, collecting the training data and/or the inference data), a model training phase, and a model inference phase. Further, an inference result application phase may be further included. FIG. 3A shows an AI application framework. In the foregoing data collection phase, a data source (data source) is used to provide the training data and the inference data. In the model training phase, the training data (training data) provided by the data source is analyzed or trained to obtain an AI model. The AI model represents a mapping relationship between input and output of the model. Obtaining the AI model through learning by a model training host is equivalent to obtaining the mapping relationship between the input and the output of the model through learning by using the training data. In the model inference phase, the AI model that has been trained in the model training phase is used to perform inference based on the inference data provided by the data source, to obtain an inference result. This phase may also be understood as follows: The inference data is input to the AI model, and output is obtained by using the AI model, where the output is the inference result. The inference result may indicate a configuration parameter used (acted) by an actor object, and/or an operation performed by the actor object. The inference result is released in the inference result application phase. For example, the inference result may be uniformly planned by an actor (actor) entity. For example, the actor entity may send the inference result to one or more actor objects (for example, a core network device, an access network device, or a terminal device) for action. For another example, the actor entity may further feed back performance of the model to the data source, to facilitate subsequent update training of the model.

In a wireless communication system, the phases shown in FIG. 3A may be implemented by a same network element. In other words, one network element may be responsible for data collection, model training, model inference, and inference result release. Alternatively, different phases may be implemented by different network elements or nodes. For example, a node that performs the data collection phase and a node that performs the model training phase are different. To make the model more accurate or have a stronger generalization capability, a large amount of training data is required for model training. However, when data such as the training data is transmitted between different nodes, air interface overheads are caused. A larger amount of transmitted training data indicates higher air interface overheads.

Based on this, this disclosure provides a communication method, to reduce air interface overheads of data transmission, and ensure model training efficiency and performance to the fullest extent. In this disclosure, the data source in FIG. 3A may provide a relatively small amount of training data for the model training host. In the model training phase, the model training host may generate, based on the small amount of the training data provided by the data source and a data augmentation manner of the small amount of the training data, training data that is actually used for model training, to implement model training. It may be understood that the small amount of the training data is relative to the training data used for model training, and does not mean that a data amount of the training data is small, in other words, the data amount of the training data is less than a data amount of the training data used for model training. Optionally, as shown in FIG. 3A, the data augmentation manner of the small amount of the training data may be provided by the data source, or the data augmentation manner of the small amount of the training data may be a predefined manner that can be used to perform augmentation processing on the small amount of the training data.

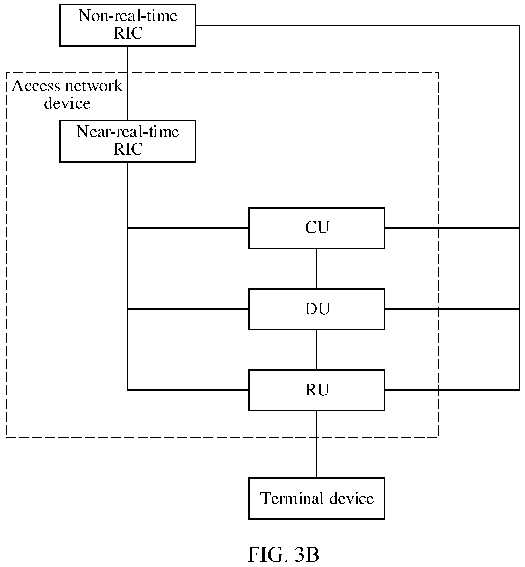

The following describes, with reference to FIG. 3B to FIG. 3E, network architectures to which the communication method provided in this disclosure can be applied.

As shown in FIG. 3B, in a first possible implementation, an access network device includes a near-real-time radio access network intelligent controller (RAN intelligent controller, RIC) module, configured to perform model learning and/or inference. For example, the near-real-time RIC may obtain information on a network side and/or a terminal side from at least one of a CU, a DU, and an RU. The information may include a small amount of training data, indication information of a data augmentation manner of the small amount of the training data, or inference data. For example, the near-real-time RIC may be configured to: determine, based on the small amount of the training data and the data augmentation manner of the small amount of the training data, training data used for model training, and perform model training. The near-real-time RIC may further perform inference by using a trained model. In addition, optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU.

As shown in FIG. 3B, in a second possible implementation, an access network device may include a non-real-time RIC (where optionally, the non-real-time RIC may be located in OAM or a core network device), configured to perform model learning and inference. For example, the non-real-time RIC may obtain information on a network side and/or a terminal side from at least one of a CU, a DU, and an RU. The information may include a small amount of training data, indication information of a data augmentation manner of the small amount of the training data, or inference data. For example, the non-real-time RIC is configured to: determine, based on the small amount of the training data and the data augmentation manner of the small amount of the training data, training data used for model training, and perform model training. The non-real-time RIC may further perform inference by using a trained model. In addition, optionally, the non-real-time RIC may submit an inference result to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU.

As shown in FIG. 3B, in a third possible implementation, an access network device includes a near-real-time RIC, and a non-real-time RIC is located outside the access network device (where optionally, the non-real-time RIC may be located in OAM or a core network device). Same as the second possible implementation, the non-real-time RIC may be configured to perform model learning and/or inference; and/or same as the first possible implementation, the near-real-time RIC may be configured to perform model learning and/or inference; and/or the near-real-time RIC may obtain AI model information from the non-real-time RIC, obtain information on a network side and/or a terminal side from at least one of a CU, a DU, and an RU, and obtain an inference result by using the information and the AI model information. Optionally, the near-real-time RIC may submit the inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC is configured to: determine, based on a small amount of training data and a data augmentation manner of the small amount of the training data, training data used for model training, perform model training, and perform inference by using a trained model. For example, the non-real-time RIC is configured to: determine, based on a small amount of training data and a data augmentation manner of the small amount of the training data, training data used for model training, perform model training, and perform inference by using a trained model. For example, the non-real-time RIC is configured to: determine, based on a small amount of training data and a data augmentation manner of the small amount of the training data, training data used for model training, perform model training, and submit a trained model to the near-real-time RIC. The near-real-time RIC performs inference by using the trained model.

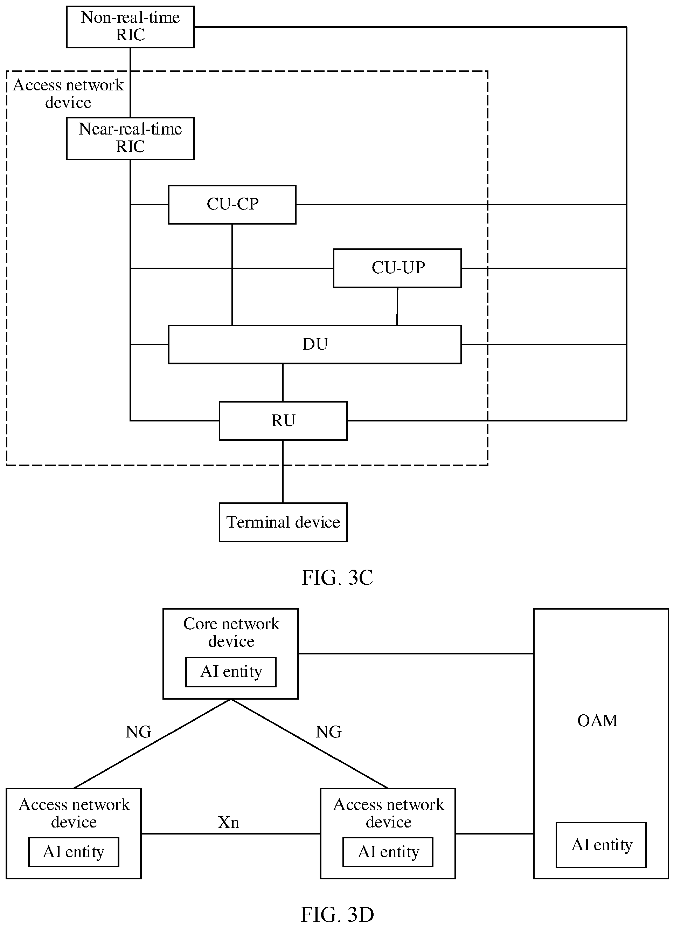

FIG. 3C is an example diagram of a network architecture to which a method provided in this disclosure can be applied. In comparison with FIG. 3B, in FIG. 3C, a CU is separated into a CU-CP and a CU-UP.

FIG. 3D is an example diagram of a network architecture to which a method provided in this disclosure can be applied. As shown in FIG. 3D, optionally, an access network device includes one or more AI entities, and a function of the AI entity is similar to that of the foregoing near-real-time RIC. Optionally, OAM includes one or more AI entities, and a function of the AI entity is similar to that of the foregoing non-real-time RIC. Optionally, a core network device includes one or more AI entities, and a function of the AI entity is similar to that of the foregoing non-real-time RIC. When the OAM and the core network device each include an AI entity, models obtained through training by the AI entities of the OAM and the core network device are different, and/or models used for inference are different.

In this disclosure, the models are different in terms of at least one of the following: a structure parameter of the model (for example, a quantity of layers and/or a weight of the model), an input parameter of the model, or an output parameter of the model.

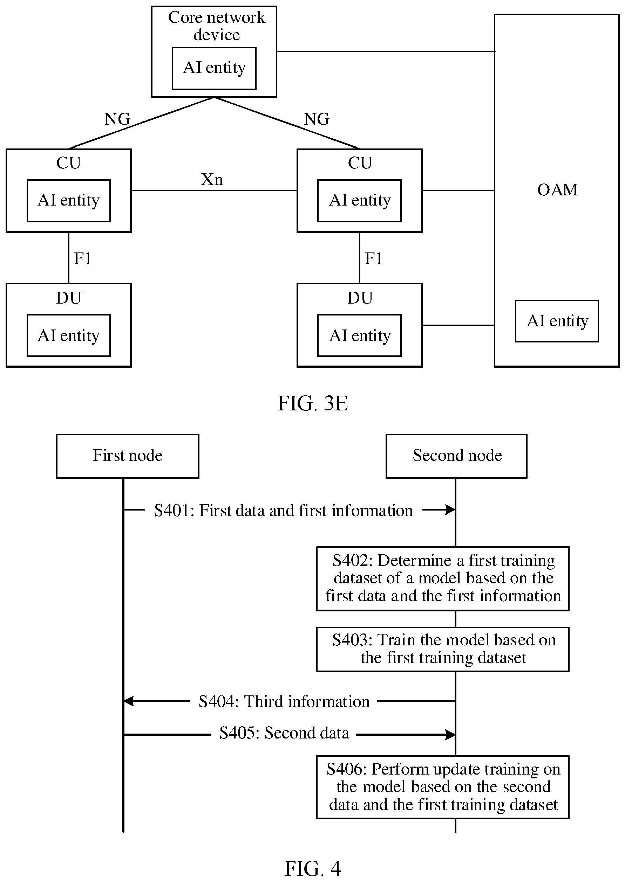

FIG. 3E is an example diagram of a network architecture to which a method provided in this disclosure can be applied. In comparison with FIG. 3D, in FIG. 3E, an access network device is separated into a CU and a DU. Optionally, the CU may include an AI entity, and a function of the AI entity is similar to that of the foregoing near-real-time RIC. Optionally, the DU may include an AI entity, and a function of the AI entity is similar to that of the foregoing near-real-time RIC. When the CU and the DU each include an AI entity, models obtained through training by the AI entities of the CU and the DU are different, and/or models used for inference are different. Optionally, the CU in FIG. 3E may be further separated into a CU-CP and a CU-UP. Optionally, one or more AI models may be deployed in the CU-CP; and/or one or more AI models may be deployed in the CU-UP. Optionally, in FIG. 3D or FIG. 3E, OAM of the access network device and OAM of the core network device may be separately deployed.

In this disclosure, one parameter or a plurality of parameters may be obtained through inference by using one model. Learning processes of different models may be deployed on different devices or nodes, or may be deployed on a same device or node. Inference processes of different models may be deployed on different devices or nodes, or may be deployed on a same device or node.

The following describes in detail the communication method provided in this disclosure with reference to a solution 1 to a solution 3. Steps or operations included in these methods are merely examples, and other operations or variations of various operations may be further performed in this disclosure. In addition, the steps may be performed in a sequence different from a sequence presented this disclosure, and not all the operations in this disclosure may be performed.

Solution 1

FIG. 4 shows a communication method. A first node corresponds to the foregoing node that performs the data collection phase, or the first node corresponds to a node that can forward or manage data collected in the foregoing data collection phase, and a second node corresponds to the foregoing node that performs the model training phase. The method mainly includes the following steps.

S401: The second node obtains first data and first information from the first node, where the first information indicates a data augmentation manner of the first data.

The first node may be a data collection node, and has a function of collecting (which may also be described as, for example, collecting or measuring) training data. The second node may obtain related data from one or more data collection nodes. For example, the first node in S401 may be a node that can provide the first data and the first information in a plurality of data collection nodes. Alternatively, the first node may be a data management node, the data management node is connected to one or more data collection nodes, the data collection node has a function of collecting training data, and the data management node may manage the training data collected by the data collection node connected to the data management node. The second node may obtain related data from one or more data management nodes. For example, the first node in S401 may be a node that can provide the first data and the first information in a plurality of data management nodes. Data collection nodes connected to different data management nodes may overlap or may not overlap. This is not limited in this disclosure. The second node is used to train a model, or is referred to as a model training host (model training host). An example is provided but this is not limited thereto: The first node may be a terminal device, and the second node is an access network device, a CU of an access network device in a separation architecture, or a DU of the access network device in the separation architecture; the first node may be an access network device, a CU of an access network device in a separation architecture, or a DU of the access network device in the separation architecture, and the second node is a terminal device; the first node may be a terminal device, an access network device, a CU of an access network device in a separation architecture, or a DU of the access network device in the separation architecture, and the second node is an AI network element or a core network element; the first node may be a core network device, and the second node is an access network device, a CU of an access network device in a separation architecture, or a DU of the access network device in the separation architecture; or the first node may be a third-party node that can provide data (for example, the training data), and the second node may be a terminal device, an access network device, a CU or a DU of an access network device in a separation architecture, an AI network element, or a core network element.

Optionally, the first node may send the first data and the first information to the second node by using one piece of signaling, or may separately send the first data and the first information by using different signaling. When the first data and the first information are distributed in different signaling, an association relationship may be established between the first data and the first information, in other words, the first information indicates the data augmentation manner of the first data.

Specifically, the first data may be a small amount of training data that is stored in or that can be obtained by the first node. The data augmentation manner of the first data may be understood as a data augmentation manner applicable to performing augmentation processing on the first data, or referred to as a data augmentation manner that matches the first data. Optionally, the first node may add, to the first information, identifiers of all or some of data augmentation manners that match the first data, to indicate the data augmentation manner of the first data to the second node. Both the first node and the second node may determine a corresponding data augmentation manner based on the identifier of the data augmentation manner. Alternatively, the first node may add other information to the first information, to indicate the data augmentation manner of the first data to the second node. This is not limited in this disclosure.

Optionally, different data types match different data augmentation manners, or data in different application scenarios matches different data augmentation manners. It may be understood that the method does not exclude that different data types may match a same data augmentation manner. For example, a data augmentation manner that matches a first data type is different from a data augmentation manner that matches a second data type, and the data augmentation manner that matches the second data type is the same as a data augmentation manner that matches a third data type. This method does not exclude that data in different application scenarios matches a same data augmentation manner. For example, a data augmentation manner that matches data in a first application scenario is the same as a data augmentation manner that matches data in a second application scenario, and the data augmentation manner that matches the data in the second application scenario is different from a data augmentation manner that matches data in a third application scenario. The application scenario herein may be understood as a model application scenario or an application field of the model.

For example, for image data in an image processing field, an available data augmentation manner includes at least one of the following: geometric transformation (for example, rotation, cropping, and/or scaling), color transformation, noise addition, or the like. For example, the first data includes an image, a data augmentation manner of the image includes rotation, and a subsequent first training dataset may include three new images obtained by performing 90-degree, 180-degree, and 270-degree rotation on the image. Optionally, the first training dataset may further include the image in the first data.

For example, for language data in a natural language processing field, an available data augmentation manner includes synonym replacement, back translation, and/or the like. For example, the first data includes a segment of Chinese, and a corresponding data augmentation manner is back translation. For example, a segment of Chinese is translated into English, and then English is translated back into Chinese, so that a new segment of Chinese may be obtained. In this example, a first training dataset may include the new segment of Chinese, and optionally, the first training dataset may further include the segment of Chinese in the first data.

For example, for channel data, an available data augmentation manner includes but is not limited to one or more of the following: channel flipping, channel interception, channel scaling, channel shift, noise addition, channel cross-replacement, virtual transmission, or data augmentation performed by using a generative AI model. For ease of understanding, the following describes, with reference to the accompanying drawings, the data augmentation manner applicable to the channel data.

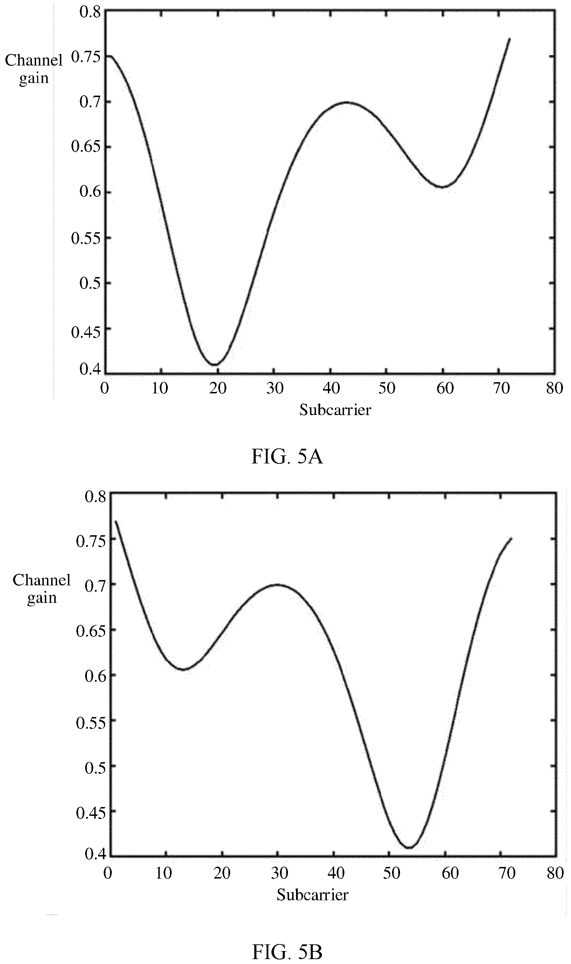

The channel flipping may mean that in one or more dimensions of time domain, delay domain, frequency domain, Doppler domain, antenna domain (or space domain), or angle domain (or beam domain), positions of a channel element with a lowest index and a channel element with a highest index are exchanged, positions of a channel element with a second lowest index and a channel element with a second highest index are exchanged, and so on. For example, FIG. 5A shows a frequency domain channel including 72 subcarriers. The frequency domain channel in an order of subcarrier indexes from 1 to 72 is flipped in a frequency domain dimension, in other words, a new frequency domain channel shown in FIG. 5B may be generated in an order of subcarrier indexes from 72 to 1. In this example, the first data may include the frequency domain channel shown in FIG. 5A, and the first training dataset includes a new frequency domain channel shown in FIG. 5B, and optionally further includes the frequency domain channel shown in FIG. 5A.

The channel interception may mean that a plurality of consecutive channel elements with consecutive indexes are intercepted in one or more dimensions of time domain, delay domain, frequency domain, Doppler domain, antenna domain (or space domain), or angle domain (or beam domain). For example, if channel elements of 36 consecutive subcarriers starting from an index 11 to an index 46 are intercepted from the 72 subcarriers shown in FIG. 5A, a new frequency domain channel including the channel elements of the 36 subcarriers may be formed. In this example, the first data may include the frequency domain channel shown in FIG. 5A, and a first training dataset includes the new frequency domain channel including the channel elements of the 36 subcarriers.

The channel scaling may mean that a plurality of channel elements are extracted at equal intervals based on indexes of channel elements in one or more dimensions of time domain, delay domain, frequency domain, Doppler domain, antenna domain (or space domain), or angle domain (or beam domain). For example, the foregoing channel element is specifically a subcarrier. From the 72 subcarriers shown in FIG. 5A, subcarriers whose indexes are 10, 12, 14, ..., and 70 are extracted at every two indexes from subcarriers starting from a subcarrier 10 to a subcarrier 70, to form a new frequency domain channel including 30 subcarriers. Alternatively, in one or more dimensions of time domain, delay domain, frequency domain, Doppler domain, antenna domain (or space domain), or angle domain (or beam domain), a same quantity of channel elements are interpolated in every two channel elements with adjacent indexes based on indexes of channel elements. An interpolation method may be polynomial interpolation, linear interpolation, cubic interpolation, or the like. For example, if one piece of new channel data is inserted into every two subcarriers with adjacent indexes in the 72 subcarriers shown in FIG. SA, a new frequency domain channel including 143 subcarriers may be formed. In this example, the first data may include the frequency domain channel shown in FIG. 5A, and a first training dataset includes the new frequency domain channel including the 143 subcarriers.

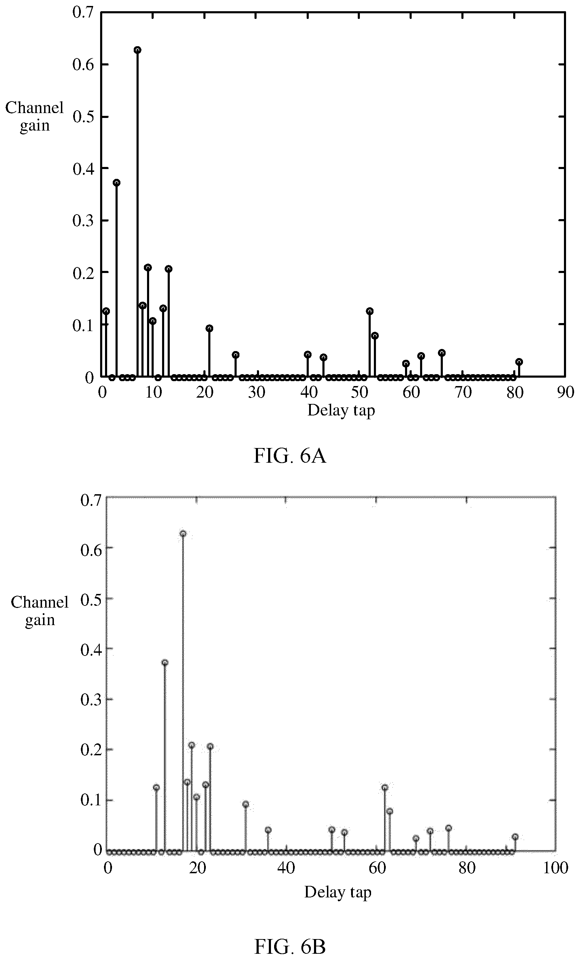

The channel shift may mean that in one or more dimensions of delay domain, Doppler domain, and angle domain (or beam domain), channel elements are shifted as a whole in a direction with a smaller index or a larger index, or is cyclically shifted. For example, FIG. 6A shows a delay domain channel including 81 delay taps (delay taps), and the delay domain channel is shifted as a whole for 10 delay taps in a direction with a larger index, so that a new delay domain channel including 91 delay taps shown in FIG. 6B may be obtained. In this example, the first data may include the delay domain channel shown in FIG. 6A, and the first training dataset includes the new delay domain channel shown in FIG. 6B, and optionally further includes the delay domain channel shown in FIG. 6A.

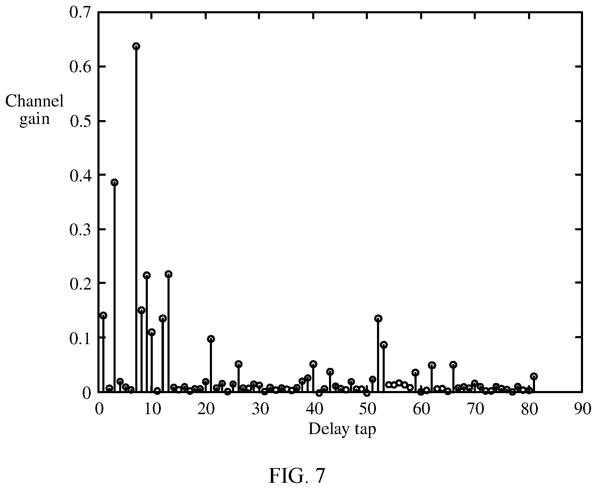

The noise addition may mean that noise that complies with specific distribution is superimposed in one or more dimensions of time domain, delay domain, frequency domain, Doppler domain, antenna domain (or space domain), and angle domain (or beam domain). For example, on the delay domain channel shown in FIG. 6A, white Gaussian noise with an average value of 0 and a variance of 0.01 is superimposed, to obtain a new delay domain channel shown in FIG. 7. In this example, the first data may include the delay domain channel shown in FIG. 6A, and the first training dataset includes the new delay domain channel shown in FIG. 7, and optionally further includes the delay domain channel shown in FIG. 6A.

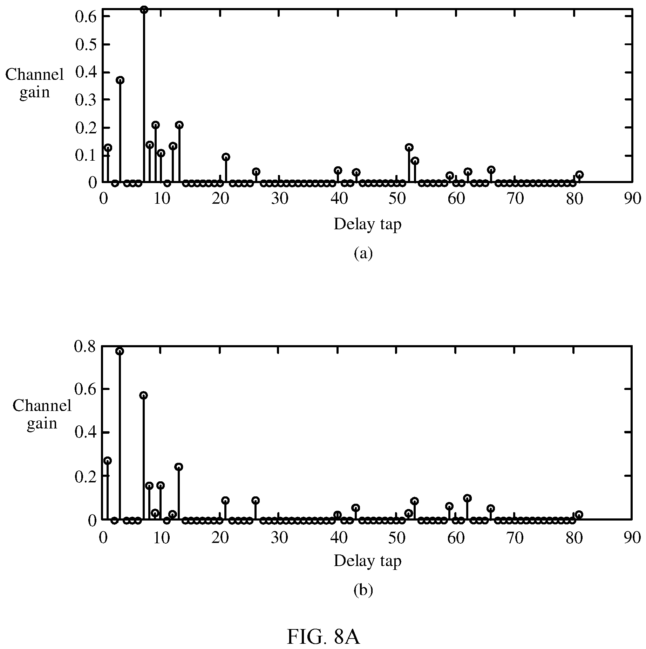

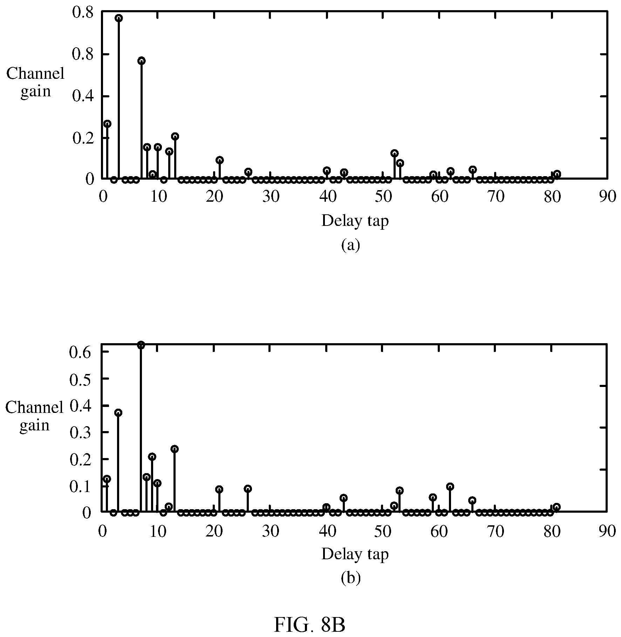

The channel cross-replacement may mean that a plurality of channel elements with asame index in two pieces of channel data are exchanged in one or more dimensions of delaydomain, Doppler domain, and angle domain (or beam domain). For example, for a delay domainchannel shown in (a) in FIG. 8A and a delay domain channel shown in (b) in FIG. 8A, channelelements with the first 10 delay tap indexes of the two channels are exchanged. After the exchange, (a) in FIG. 8A becomes a new delay domain channel shown in (a) in FIG. 8B, and (b) in FIG. 8A becomes a new delay domain channel shown in (b) in FIG. 8B. In this example, the first data may include the delay domain channel shown in FIG. 8A, and the first training dataset includes the new delay domain channel shown in FIG. 8B, and optionally further includes the delay domain channel shown in FIG. 8A.

The virtual transmission may mean that, a plurality of virtual sending signals (data signals and/or reference signals) are obtained based on a preset manner or a random generation manner, and virtual received signals corresponding to the plurality of sending signals are obtained through calculation based on the plurality of sending signals and channel data. Alternatively, a plurality of virtual sending signals (data signals and/or reference signals) are obtained based on a preset manner or a random generation manner, and the plurality of virtual sending signals are pre-coded by using a precoding vector (or referred to as a precoding matrix or a beam vector), to obtain a plurality of pre-coded sending signals. Virtual received signals corresponding to the plurality of pre-coded sending signals are obtained through calculation based on the plurality of pre-coded sending signals and channel data. Specifically, virtual received signals corresponding to all virtual sending signals may be generated based on one piece of channel data, or a virtual received signal corresponding to each virtual sending signal is generated based on each piece of channel data in a plurality of pieces of channel data, to obtain a plurality of groups of {virtual sending signals, virtual received signals, and channel data}. For example, a virtual sending signal set S is preset, where S includes a virtual sending signals. According to a channel dataset H (where H includes b pieces of channel data), a virtual transmission model may be represented as $y=h*s+n$, where y is a received signal, h is any piece of channel data in the channel dataset H, s is any signal in the virtual sending signal set, and n is noise. In this case, a received signal set may be generated, and the received signal set includes a*b received signals, a and b are positive integers. In this example, the first data may include the foregoing one or more pieces of channel data, and the first training dataset includes a plurality of groups of {virtual sending signals, virtual received signals, and channel data}. For another example, a virtual sending signal set S and a precoding matrix set W are preset, where S includes a virtual sending signals, and W includes q precoding matrices, a and q are positive integers. Optionally, a is equal to 1. According to a channel dataset H (where H includes b pieces of channel data), a virtual transmission model may be represented as $y=h*w*s+n$, where y is a received signal, b is a positive integer, h is any piece of channel data in the channel dataset H, w is any precoding vector in W, s is any signal in the virtual sending signal set, and n is noise. In this case, a received signal set may be generated, and the received signal set includes a*b*q received signals. In this example, the first data may include the foregoing one or more pieces of channel data, and the first training dataset includes a plurality of groups of {virtual sending signals, precoding matrices, virtual received signals, and channel data}. In this disclosure, a positive integer may be 1, 2, 3, 4, or a larger integer. This is not limited.

Data augmentation is performed by using the generative AI model, for example, a generative AI model such as a generative adversarial network (generative adversarial network, GAN), to generate more training data whose distribution is the same as that of existing training data (namely, the foregoing first data). In this example, the first training dataset includes the foregoing more training data, and optionally, may further include the first data.

Optionally, the first information may further include a parameter of the data augmentation manner, so that the second node specifically performs corresponding data augmentation processing on the first data based on the parameter of the data augmentation manner. A data augmentation manner corresponding to the foregoing channel data is used as an example. The first information may further include one or more of the following: some or all of information of the generative AI model; a dimension of data augmentation; at least two of a start index, a length, or an end index of the channel element in the channel interception; a granularity of the channel scaling, for example, a extraction interval, a quantity of channel elements for interpolation, or the interpolation method; a distance of the channel shift; noise distribution information; a pattern of the channel cross-replacement; information about the virtual sending signal and/or the precoding vector used in the virtual transmission (for example, a value and/or a length of the precoding vector), or the like; a format and/or a format conversion method of a channel in the dataset; a collection range corresponding to the first data, for example, a cell edge, a cell center, or a multipath delay range; or the like.

S402: The second node determines a first training dataset of the model based on the first data and the first information.

Specifically, the second node determines the first training dataset of the model based on the first data and the data augmentation manner of the first data. The data augmentation manner of the first data corresponds to the data augmentation manner indicated by the first information in S401.

Optionally, the first information indicates a plurality of data augmentation manners that match the first data. The second node may perform data augmentation processing on the first data based on some or all of data augmentation manners in the plurality of data augmentation manners, to obtain the first training dataset of the model. For example, the second node may determine, based on a data augmentation manner supported by the second node, a model training requirement, and/or a model application scenario, an actually used data processing manner in the data augmentation manners indicated by the first information. It may be understood that the actually used data processing manner may include some or all of data augmentation manners in the data augmentation manners indicated by the first information, and then perform data augmentation processing on the first data based on the actually used data processing manner. During data augmentation processing, the model training requirement and/or the model application scenario are/is considered, so that a first training dataset that meets the model training requirement and/or the model application scenario can be obtained. During data augmentation processing, a capability of supporting the data augmentation manner of the second node is considered, so that effectiveness of data augmentation processing can be ensured.

Optionally, the first training dataset of the model may include the first data and new data obtained by performing data augmentation processing on the first data; or the first training dataset of the model may include only new data obtained by performing data augmentation processing on the first data. This is not limited in this disclosure.

S403: The second node trains the model based on the first training dataset.

Specifically, when training the model, the second node may use supervised learning or unsupervised learning. This is not limited. A related loss function is not limited, for example, may be determined by factors such as a structure type of the model, the first training dataset of the model, and/or the model application scenario. Some examples of the structure type of the model are as follows: a CNN, an RNN, and an FNN.

Optionally, in FIG. 4, after S403, the second node may further obtain second data from the first node, where the second data is used to perform update training on the model, or it may be understood as that the second node obtains more training data to perform update training on the model. An update training process may be applied to, but is not limited to a case in which performance of the model obtained through training based on the first training dataset does not meet a performance requirement. The performance requirement may also be referred to as reference performance. The performance requirement may be a preset performance indicator, or may be indicated by the first node to the second node. For example, the first node sends, to the second node, information that indicates the performance requirement. Specifically, the first node may determine the performance requirement based on performance of another historically trained model.

For example, the second node may determine whether the performance of the model obtained through training based on the first training dataset meets the performance requirement. When the performance of the model does not meet the performance requirement, the second node obtains the second data from the first node. Alternatively, the second node may send a model training result to the first node, where the model training result indicates the performance of the model obtained through training based on the first training dataset. The first node may determine whether the performance of the model meets the performance requirement, and send the second data to the second node when the performance of the model does not meet the performance requirement.

For example, after S403, FIG. 4 further shows the following optional steps S404 to S406.

S404: The second node sends third information to the first node.

In an optional implementation, the third information may indicate the model training result. In other words, the third information indicates the performance of the model obtained through training based on the first training dataset. Specifically, the third information may include a result value of the loss function after model training is completed. In other words, the second node indicates, by using the third information, a result of the loss function after model training is completed, to reflect the performance of the model. Alternatively, the third information may specifically indicate test performance of the model obtained through training on a predefined or preconfigured test set. For example, the third information includes a parameter value corresponding to the test performance. For example, the third information includes a performance level corresponding to the test performance, where the performance level is, for example, good/poor, or qualified/unqualified. For example, the third information includes indication information of the performance level corresponding to the test performance. For example, when the third information includes a first value, it indicates that the performance level corresponding to the test performance is good; or when the third information includes a second value, it indicates that the performance level corresponding to the test performance is poor. Alternatively, the third information may specifically indicate whether the model obtained through training meets a predefined or preconfigured performance requirement. For example, when the third information includes a third value, it indicates that the model obtained through training meets the predefined or preconfigured performance requirement; or when the third information includes a fourth value, it indicates that the model obtained through training does not meet the predefined or preconfigured performance requirement. Alternatively, the third information may specifically indicate a performance level that the model obtained through training meets in a plurality of predefined or preconfigured performance levels. For example, the model meets a first performance level in the plurality of preconfigured performance levels, and the third information includes an identifier of the first performance level in the plurality of preconfigured performance levels.

In another optional implementation, the third information indicates that the model does not meet the performance requirement, and/or the third information is used to request the second data. Specifically, the third information may include a fourth value and indicates that the model obtained through training does not meet a predefined or preconfigured performance requirement; and/or the third information includes a first flag bit (or referred to as a first field), and a value of the first flag bit may be predefined, and indicates to request the second data.

S405: The first node sends the second data to the second node.

Specifically, the first node may determine, based on the third information, that the model does not meet the performance requirement. The model is obtained through training based on the first training dataset.

S406: The second node performs update training on the model based on the second data and the first training dataset.

In this disclosure, the second node obtains a small amount of training data and a small quantity of data augmentation manners from the first node, and generates the training data actually used for model training. This can reduce overheads of training data transmission, and improve model training efficiency and performance.

Solution 2

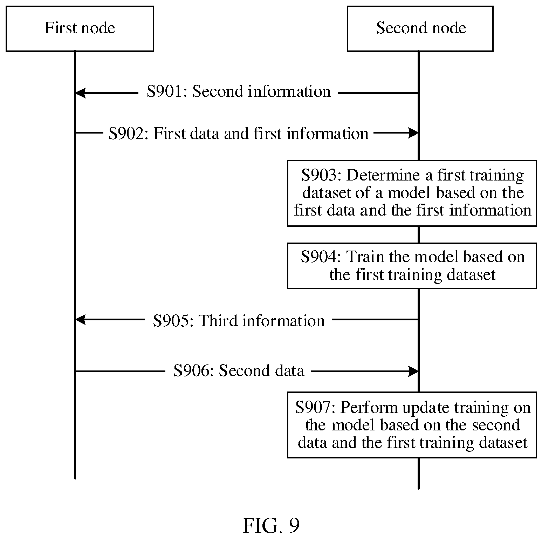

FIG. 9 shows a communication method. A first node corresponds to the foregoing node that performs the data collection phase, or the first node corresponds to a node that can forward or manage data collected in the foregoing data collection phase, and a second node corresponds to the foregoing node that performs the model training phase. The method mainly includes the following steps.

S901: The second node sends second information to the first node.

For definitions of the first node and the second node, refer to S401 for understanding. Details are not described herein again in this disclosure.

Specifically, the second information indicates at least one of the following:

a type of first data, where the type is, for example, one or more of the following types: channel data, received signal data, received signal strength data, received signal quality data, received signal power data, location data, moving track data, and interfering signal data. The location data or the moving track data is one or more of information authorized by a user, information obtained through desensitization, or information unbound from user privacy information. The type of the channel data may be specifically classified into: channel data in a specified format, time domain channel data, frequency domain channel data, delay domain channel data, space domain channel data, angle domain channel data, and the like. Alternatively, the type of the first data may be the image data or the language data shown in S401.

A scenario corresponding to a first training dataset may also be understood as a model application scenario. The scenario corresponding to the first training dataset may be used to determine a collection range of the first data. Optionally, the first data is data in the scenario corresponding to the first training dataset, or the first data may not be the data in the scenario corresponding to the first training dataset, but the first data can be converted into the data in the scenario corresponding to the first training dataset after data augmentation processing is performed on the first data in a related data augmentation manner (for example, indicated by first information). Examples of the scenario corresponding to the first training dataset are as follows: a scenario classified based on radio signal receiving strength, for example, a cell edge or a cell center; a scenario classified based on a radio channel environment, for example, a scenario with a large quantity of scatters or a scenario with a small quantity of scatters; a scenario classified based on a measured multipath delay range, for example, a scenario with a long multipath delay or a scenario with a short multipath delay; or an actual place such as a shopping mall or a high-speed railway.

For a data amount of the first data, specifically, the second node may include, in the second information, indication information such as a size of a training dataset supported by the second node, a computing capability of the second node, or a storage capability of the second node, to indicate the first node to determine the data amount of the first data based on the foregoing indication information.

For a data augmentation manner supported by the second node,

optionally, the second information may also be understood as capability information of the second node, and indicates the first node to provide the first data and the data augmentation manner that meet the capability of the second node.

S902: The first node sends the first data and first information to the second node.

Specifically, the first node may determine the to-be-sent first data based on the second information. For example, when the second information includes information that indicates the data amount of the first data, the first node may determine, based on the second information, a data amount (or referred to as a size) of the to-be-sent first data; and/or when the second information includes information that indicates the data augmentation manner supported by the second node, the first node may determine, based on the second information, the data augmentation manner indicated by the first information.

In addition, for descriptions of the first data and the first information, refer to the descriptions in S401 for understanding. Details are not described herein again in this disclosure.

S903: The second node determines the first training dataset of the model based on the first data and the first information.

For implementation of this step, refer to the foregoing S402. Details are not described herein again in this disclosure.

S904: The second node trains the model based on the first training dataset.

Optionally, as described in FIG. 4, in FIG. 9, after S904, the second node may further obtain second data from the first node, where the second data is used to perform update training on the model, or it may be understood as that the second node obtains more training data to perform update training on the model.

For example, after S904, FIG. 9 further shows the following optional steps S905 to S907.

S905: The second node sends third information to the first node.

For a definition of the third information, refer to the descriptions in S404 for understanding. Details are not described herein again in this disclosure.

S906: The first node sends the second data to the second node.

Specifically, the first node may determine, based on the third information, that the model does not meet a performance requirement. The model is obtained through training based on the first training dataset.

S907: The second node performs update training on the model based on the second data and the first training dataset.

In this disclosure, the first node considers the capability of the second node, and provides proper training data and a proper data augmentation manner for the second node, so that the second node generates training data actually used for model training. This can reduce overheads of training data transmission, and improve model training efficiency and performance.

Solution 3

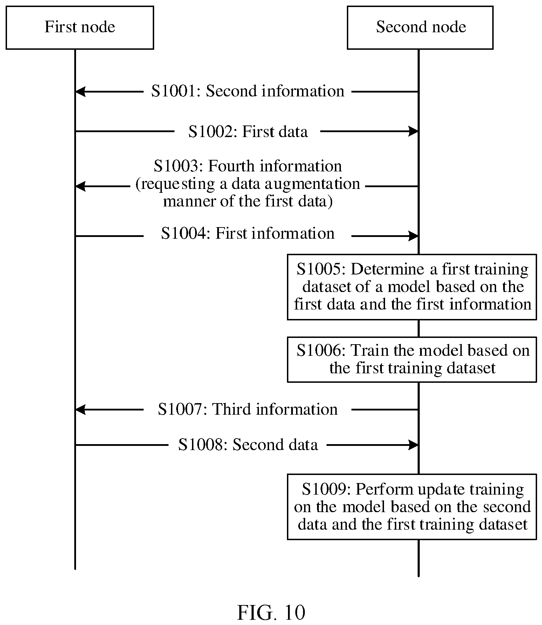

FIG. 10 shows a communication method. A first node corresponds to the foregoing node that performs the data collection phase, or the first node corresponds to a node that can forward or manage data collected in the foregoing data collection phase, and a second node corresponds to the foregoing node that performs the model training phase. The method mainly includes the following steps.

Optionally, S1001: The second node sends second information to the first node.

When this step is performed, for implementation of this step, refer to the foregoing S401. Details are not described herein again in this disclosure.

In addition, for definitions of the first node and the second node, refer to S401 for understanding. Details are not described herein again in this disclosure.

S1002: The first node sends first data to the second node.

For determining of the first data, refer to the descriptions in S902 for understanding. Details are not described herein again in this disclosure. S1003: The second node sends fourth information to the first node, where the fourth information is used to request a data augmentation manner of the first data.

It may be understood that S1003 and S1002 may be performed in no sequence. Alternatively, S1003 may be performed before S1002. Alternatively, S1002 is performed before S1003. For example, when S1002 is performed before S1003, a reason for performing S1003 is that a data amount of the first data cannot meet a data amount requirement for model training, and the second node may request the data augmentation manner of the first data from the first node by sending the fourth information.

Optionally, the fourth information includes indication information of a first data augmentation manner. The first data augmentation manner may be understood as a data augmentation manner that the second node intends (plans or expects) to use for the first data.

S1004: The first node sends first information to the second node, where the first information indicates the data augmentation manner of the first data.

If the fourth information includes the indication information of the first data augmentation manner, the first node may further determine whether the first data augmentation manner is the data augmentation manner that matches the first data.

If the first data augmentation manner matches the first data, the first node may include acknowledgment information in the first information, where the acknowledgment information indicates that the data augmentation manner of the first data includes the first data augmentation manner. Alternatively,

if the first data augmentation manner does not match the first data, the first node may include negative acknowledgment information and/or indication information of a second data augmentation manner in the first information and indicates that the data augmentation manner of the first data does not include the first data augmentation manner.

Specifically, the first information may include only the negative acknowledgment information, and the negative acknowledgment information indicates that the data augmentation manner of the first data does not include the first data augmentation manner. In this case, the second node may redetermine the data augmentation manner that the second node intends to use for the first data, and initiate, to the first node based on step S1003, a request for carrying the fourth information until the first node indicates that the data augmentation manner of the first data includes the data augmentation manner that the second node intends to use. Alternatively,

the first information may include only the indication information of the second data augmentation manner. This case may be understood as that the first node implicitly indicates that the data augmentation manner of the first data does not include the first data augmentation manner, and the data augmentation manner of the first data includes the second data augmentation manner. In this case, the second node may also determine, based on the first information, that the data augmentation manner of the first data includes the second data augmentation manner. Alternatively, the first information may include the foregoing negative acknowledgment information and the indication information of the second data augmentation manner. In this case, that the first information includes the negative acknowledgment information may be understood as that the first node explicitly indicates that the data augmentation manner of the first data does not include the first data augmentation manner, and that the first information includes the indication information of the second data augmentation manner may be understood as that the first node indicates that the data augmentation manner of the first data includes the second data augmentation manner. In this case, the second node may determine, based on the first information, that the data augmentation manner of the first data includes the second data augmentation manner.

S1005: The second node determines a first training dataset of a model based on the first data and the first information.

For implementation of this step, refer to the foregoing S402. Details are not described herein again in this disclosure.

S1006: The second node trains the model based on the first training dataset.

Optionally, as described in FIG. 4, in FIG. 10, after S1006, the second node may further obtain second data from the first node, where the second data is used to perform update training on the model, or it may be understood as that the second node obtains more training data to perform update training on the model. For example, after S1006, FIG. 10 further shows the following optional steps S1007 to S1009.

S1007: The second node sends third information to the first node.

For a definition of the third information, refer to the descriptions in S404 for understanding. Details are not described herein again in this disclosure.

S1008: The first node sends the second data to the second node.

Specifically, the first node may determine, based on the third information, that the model does not meet a performance requirement. The model is obtained through training based on the first training dataset.

S1009: The second node performs update training on the model based on the second data and the first training dataset.

In this disclosure, after obtaining a small amount of training data provided by the first node, the second node obtains a matched data augmentation manner, and then generates training data actually used for model training. This can reduce overheads of training data transmission, and improve model training efficiency and performance.

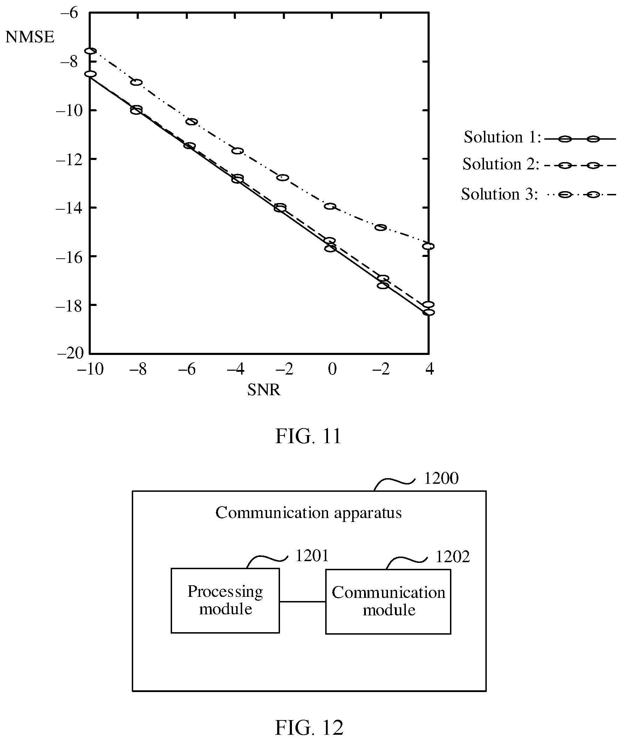

In addition, FIG. 11 shows model training effects of the solution 1, the solution 2, and the solution 3. In the solution 1, model training is performed by using a large amount of training data. In the solution 2, model training is performed based on a small amount of training data and a small quantity of data augmentation manners. In the solution 3, model training is performed by using a small amount of training data. For example, in a channel estimation scenario, a horizontal coordinate represents a signal-to-noise ratio (signal-to-noise ratio, SNR), and a vertical coordinate represents performance of a model. An error between an estimated channel and a real channel is represented by, for example, a normalized mean square error (normalized mean square error, NMSE). A smaller NMSE indicates that the estimated channel is closer to the real channel, and indicates better performance of the model. In the solution 1, a model obtained by training 50000 different channel samples is used. In the solution 2, 1000 channel samples in the 5000 channel samples used in the solution 1 are used to generate 50000 pieces of training data in a data augmentation manner of noise addition, and a model obtained by training the 50000 pieces of training data is used. In the solution 3, a model obtained by training 1000 different channel samples is used. It can be learned from FIG. 11 that performance of the model obtained through training in the solution 2 is approximate to performance of the model obtained through training in the solution 1. In other words, a proper data augmentation manner is used, so that performance similar to that of an AI model trained by using a large amount of training data can be obtained through training by using only a small amount of training data, to greatly reduce overheads of collecting, storing, and transmitting the training data.

The foregoing separately describes the methods provided in this disclosure from a perspective of interaction between the first node and the second node. To implement functions in the methods, the first node and the second node may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Based on a same concept, refer to FIG. 12. This disclosure provides a communication apparatus 1200. The communication apparatus 1200 includes a processing module 1201 and a communication module 1202. The communication apparatus 1200 may be a first node, or may be a communication apparatus that is used in the first node or that is used in matching with the first node and that can implement a communication method performed on a first node side. Alternatively, the communication apparatus 1200 may be a second node, or may be a communication apparatus that is used in the second node or that is used in matching with the second node and that can implement a communication method performed on a second node side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the first node side or the second node side in the foregoing methods. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit.

When the communication apparatus 1200 is used in the first node, the processing module 1201 may be configured to implement a processing function of the first node in the embodiment shown in FIG. 4, FIG. 9, or FIG. 10, and the communication module 1202 may be configured to implement a receiving and sending function of the first node in the embodiment shown in FIG. 4, FIG. 9, or FIG. 10. Alternatively, the communication apparatus may be understood with reference to the third aspect and the possible designs in the third aspect in the summary.

When the communication apparatus 1200 is used in the second node, the processing module 1201 may be configured to implement a processing function of the second node in the embodiment shown in FIG. 4, FIG. 9, or FIG. 10, and the communication module 1202 may be configured to implement a receiving and sending function of the second node in the embodiment shown in FIG. 4, FIG. 9, or FIG. 10. Alternatively, the communication apparatus may be understood with reference to the fourth aspect and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may alternatively be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this disclosure is an example, is merely division into logical functions, and may be other division during actual implementation. In addition, functional modules in embodiments in this disclosure may be integrated into one processor, or each of the modules may exist alone physically, or two or more modules may be integrated into one module. The integrated module may be implemented in a form of hardware, or may be implemented in a form of a software functional module.

Based on a same technical concept, this disclosure further provides a communication apparatus 1300. For example, the communication apparatus 1300 may be a chip or a chip system. Optionally, in this disclosure, the chip system may include a chip, or may include a chip and another discrete component.

The communication apparatus 1300 may be configured to implement a function of any network element in the communication system shown in FIG. 1A or FIG. 1B. The communication apparatus 1300 may include at least one processor 1310. The processor 1310 is coupled to a memory. Optionally, the memory may be located in the apparatus, the memory may be integrated with the processor, or the memory may be located outside the apparatus. For example, the communication apparatus 1300 may further include at least one memory 1320. The memory 1320 stores a computer program, a computer program or instructions, and/or data necessary for implementing any one of the foregoing embodiments. The processor 1310 may execute the computer program stored in the memory 1320, to complete the method in any one of the foregoing embodiments.

The communication apparatus 1300 may further include a communication interface 1330, and the communication apparatus 1300 may exchange information with another device through the communication interface 1330. For example, the communication interface 1330 may be a transceiver, a circuit, a bus, a module, a pin or another type of communication interface. When the communication apparatus 1300 is a chip-type apparatus or circuit, the communication interface 1330 in the apparatus 1300 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

Couplings in this disclosure are indirect couplings or communication connections between apparatuses, units, or modules, and may be electrical, mechanical, or in another form, and are used for information interaction between the apparatuses, the units, and the modules. The processor 1310 may operate in cooperation with the memory 1320 and the communication interface 1330. A specific connection medium between the processor 1310, the memory 1320, and the communication interface 1330 is not limited in this disclosure.

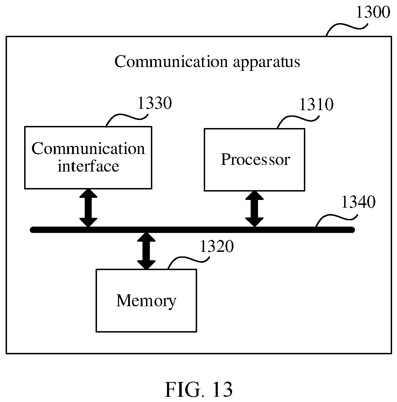

Optionally, refer to FIG. 13. The processor 1310, the memory 1320, and the communication interface 1330 are connected to each other via a bus 1340. The bus 1340 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

In this disclosure, the processor may be a general-purpose processor, a digital signal processor, an application-specific integrated circuit, a field programmable gate array or another programmable logic device, a discrete gate or transistor logic device, or a discrete hardware component. The processor can implement or perform the methods, steps, and logical block diagrams disclosed in this disclosure. The general-purpose processor may be a microprocessor or any conventional processor or the like. The steps of the methods disclosed with reference to this disclosure may be directly performed by a hardware processor, or may be performed by using a combination of hardware and a software module in the processor.

In this disclosure, the memory may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

In a possible implementation, the communication apparatus 1300 may be used in a second node. Specifically, the communication apparatus 1300 may be the second node, or may be an apparatus that can support the second node and implement a function of the second node in any one of the foregoing embodiments. The memory 1320 stores a computer program (or instructions) and/or data for implementing the function of the second node in any one of the foregoing embodiments. The processor 1310 may execute the computer program stored in the memory 1320, to complete the method performed by the second node in any one of the foregoing embodiments. Used in the second node, the communication interface in the communication apparatus 1300 may be configured to interact with a first node, and send information to the first node or receive information from the first node.

In another possible implementation, the communication apparatus 1300 may be used in a first node. Specifically, the communication apparatus 1300 may be the first node, or may be an apparatus that can support the first node and implement a function of the first node in any one of the foregoing embodiments. The memory 1320 stores a computer program (or instructions) and/or data for implementing the function of the first node in any one of the foregoing embodiments. The processor 1310 may execute the computer program stored in the memory 1320, to complete the method performed by the first node in any one of the foregoing embodiments. Used in the first node, the communication interface in the communication apparatus 1300 may be configured to interact with a second node, and send information to the second node or receive information from the second node.

The communication apparatus 1300 provided in this embodiment may be used in the second node to complete the method performed by the second node, or may be used in the first node to complete the method performed by the first node. Therefore, for technical effects that can be achieved by this embodiment, refer to the foregoing method examples. Details are not described herein again.

Based on the foregoing embodiments, this disclosure provides a communication system, including a second node and a first node. The second node and the first node may implement the communication methods provided in the embodiment shown in FIG. 4, FIG. 9, or FIG. 10.

All or a part of the technical solutions provided in this disclosure may be implemented by using software, hardware, firmware, or any combination thereof. When software is used to implement the technical solutions, all or a part of the technical solutions may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, a first node, a second node or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this disclosure, on the premise that there is no logical conflict, embodiments may be mutually referenced. For example, methods and/or terms in method embodiments may be mutually referenced. For example, functions and/or terms in apparatus embodiments may be mutually referenced. For example, functions and/or terms in apparatus embodiments and method embodiments may be mutually referenced.

It is clear that a person skilled in the art can make various modifications and variations to this disclosure without departing from the scope of this disclosure. This disclosure is intended to cover these modifications and variations of this disclosure provided that they fall within the scope of protection defined by the following claims of this disclosure and their equivalent technologies.

## Claims

1. A communication method, comprising:

   obtaining first data and first information from a first node, wherein the first information indicates a data augmentation manner of the first data; and
   determining a first training dataset of a model based on the first data and the first information.

2. The method according to claim 1, further comprising:
   sending second information to the first node, wherein the second information indicates at least one of the following: a type of the first data, a scenario corresponding to the first training dataset, a data amount of the first data, or a data augmentation manner supported by a second node, wherein the second node is used to train the model.

3. The method according to claim 1 or 2, further comprising:
   when performance of the model does not meet a performance requirement, obtaining second data from the first node, wherein the model is obtained through training based on the first training dataset, and the second data is used to perform update training on the model.

4. The method according to claim 3, wherein the obtaining second data from the first node comprises:

   sending third information to the first node, wherein the third information indicates that the performance of the model does not meet the performance requirement, and/or the third information is used to request the second data; and
   receiving the second data from the first node.

**5.** The method according to claim 3 or 4, further comprising:
obtaining, from the first node, information that indicates the performance requirement.

**6.** The method according to any one of claims 1 to 5, further comprising:
sending fourth information to the first node, wherein the fourth information is used to request the data augmentation manner of the first data.

**7.** The method according to claim 6, wherein the fourth information comprises indication information of a first data augmentation manner; and

the first information comprises acknowledgment information, and the acknowledgment information indicates that the data augmentation manner of the first data comprises the first data augmentation manner; or
the first information comprises negative acknowledgment information and indication information of a second data augmentation manner, the negative acknowledgment information indicates that the data augmentation manner of the first data does not comprise the first data augmentation manner, and the data augmentation manner of the first data comprises the second data augmentation manner.

**8.** A communication method, comprising:

determining first data and first information, wherein the first information indicates a data augmentation manner of the first data; and
sending the first data and the first information to a second node, wherein the first data and the first information are used to determine a first training dataset of a model.

**9.** The method according to claim 8, further comprising:
obtaining second information, wherein the second information indicates at least one of the following: a type of the first data, a scenario corresponding to the first training dataset, a data amount of the first data, or a data augmentation manner supported by the second node.

**10.** The method according to claim 8 or 9, further comprising: sending second data to the second node, wherein the second data is used to perform update training on the model.

**11.** The method according to claim 10, wherein before the sending second data to the second node, the method further comprises:
receiving third information from the second node, wherein the third information indicates that performance of the model does not meet a performance requirement, and/or the third information is used to request the second data.

**12.** The method according to claim 11, further comprising:
sending, to the second node, information that indicates the performance requirement.

**13.** The method according to any one of claims 8 to 12, further comprising:
receiving fourth information from the second node, wherein the fourth information is used to request the data augmentation manner of the first data.

**14.** The method according to claim 13, wherein the fourth information comprises indication information of a first data augmentation manner; and

the first information comprises acknowledgment information, and the acknowledgment information indicates that the data augmentation manner of the first data comprises the first data augmentation manner; or
the first information comprises negative acknowledgment information and indication information of a second data augmentation manner, the negative acknowledgment information indicates that the data augmentation manner of the first data does not comprise the first data augmentation manner, and the data augmentation manner of the first data comprises the second data augmentation manner.

**15.** A communication apparatus, configured to implement the method according to any one of claims 1 to 7.

**16.** A communication apparatus, configured to implement the method according to any one of claims 8 to 14.

**17.** A communication apparatus, comprising:
a processor, wherein the processor is coupled to a memory, and the processor is configured to perform the method according to any one of claims 1 to 7.

**18.** A communication apparatus, comprising:
a processor, wherein the processor is coupled to a memory, and the processor is configured to perform the method according to any one of claims 8 to 14.

**19.** A communication system, comprising the communication apparatus according to claim 15 or 17 and the communication apparatus according to claim 16 or 18.

**20.** A computer-readable storage medium, wherein the computer-readable storage medium stores instructions, and when the instructions are run on a computer, the computer is enabled to perform the method according to any one of claims 1 to 7 or the method according to any one of claims 8 to 14.

**21.** A computer program product, comprising instructions, and when the instructions are run on a computer, the computer is enabled to perform the method according to any one of claims 1 to 7 or the method according to any one of claims 8 to 14.

FIG. 1A

FIG. 1B

FIG. 2A

FIG. 2B

FIG. 3A

FIG. 3B

FIG. 3C

FIG. 3D

Core network device

AI entity

NG                    NG

CU                                    CU

AI entity        Xn        AI entity

OAM

F1                    F1

DU                                    DU

AI entity                        AI entity

AI entity

FIG. 3E

First node                                    Second node

S401: First data and first information →

S402: Determine a first training dataset of a model based on the first data and the first information

S403: Train the model based on the first training dataset

← S404: Third information

S405: Second data →

S406: Perform update training on the model based on the second data and the first training dataset

FIG. 4

FIG. 5A

FIG. 5B

FIG. 6A

FIG. 6B

FIG. 7

(a)

(b)

FIG. 8A

(a)

(b)

FIG. 8B

FIG. 9

```
┌─────────────┐                              ┌─────────────┐
│ First node  │                              │ Second node │
└─────────────┘                              └─────────────┘
       │                                            │
       │◄────── S1001: Second information ──────────│
       │                                            │
       │─────────── S1002: First data ────────────►│
       │                                            │
       │        S1003: Fourth information           │
       │◄──────(requesting a data augmentation ─────│
       │            manner of the first data)       │
       │                                            │
       │────────── S1004: First information ───────►│
       │                                            │
       │                            ┌───────────────────────────────┐
       │                            │ S1005: Determine a first train│
       │                            │  ing dataset of a model based │
       │                            │  on the first data and the    │
       │                            │       first information       │
       │                            └───────────────────────────────┘
       │                            ┌───────────────────────────────┐
       │                            │ S1006: Train the model based  │
       │                            │   on the first training       │
       │                            │          dataset              │
       │                            └───────────────────────────────┘
       │                                            │
       │◄────── S1007: Third information ───────────│
       │                                            │
       │────────── S1008: Second data ────────────►│
       │                                            │
       │                            ┌───────────────────────────────┐
       │                            │ S1009: Perform update training│
       │                            │ on the model based on the     │
       │                            │ second data and the first     │
       │                            │ training dataset              │
       │                            └───────────────────────────────┘
       │                                            │
```

FIG. 10

FIG. 11

FIG. 12

FIG. 13

## INTERNATIONAL SEARCH REPORT

| International application No. |
| --- |
| **PCT/CN2022/140221** |

**A.  CLASSIFICATION OF SUBJECT MATTER**

G06N20/00(2019.01)i

According to International Patent Classification (IPC) or to both national classification and IPC

**B.  FIELDS SEARCHED**

Minimum documentation searched (classification system followed by classification symbols)

IPC: G06N,G06F,G06K

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 增多, 增加, 增强, 扩充, 扩展, 训练, 样本, 数据, 图像, 音频, 信道, 文本, 语音, 语言, increas+, expand, enhanc+, expansion, extend+, train+, data, sample, image, picture, channel, text, voice, language

**C.  DOCUMENTS CONSIDERED TO BE RELEVANT**

| Category* | Citation of document, with indication, where appropriate, of the relevant passages | Relevant to claim No. |
| --- | --- | --- |
| X | CN 112465147 A (ROBERT BOSCH CO., LTD.) 09 March 2021 (2021-03-09) description, paragraphs 0006-0071 | 1-21 |
| A | CN 111680520 A (KUNMING UNIVERSITY OF SCIENCE AND TECHNOLOGY) 18 September 2020 (2020-09-18) entire document | 1-21 |
| A | CN 112529025 A (HUAWEI TECHNOLOGIES CO., LTD.) 19 March 2021 (2021-03-19) entire document | 1-21 |
| A | CN 113095045 A (HOHAI UNIVERSITY) 09 July 2021 (2021-07-09) entire document | 1-21 |
| A | CN 113298913 A (GUANGDONG OPPO MOBILE COMMUNICATIONS CO., LTD.) 24 August 2021 (2021-08-24) entire document | 1-21 |
| A | US 2021234687 A1 (BEIJING BAIDU NETCOM SCIENCE AND TECHNOLOGY CO., LTD.) 29 July 2021 (2021-07-29) entire document | 1-21 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 February 2023** | **22 February 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

| International application No. |
| --- |
| **PCT/CN2022/140221** |

| Patent document cited in search report | | | Publication date (day/month/year) | Patent family member(s) | | | Publication date (day/month/year) |
| --- | --- | --- | --- | --- | --- | --- | --- |
| CN | 112465147 | A | 09 March 2021 | EP | 3789924 | A1 | 10 March 2021 |
|    |            |   |               | US | 2021073660 | A1 | 11 March 2021 |
| CN | 111680520 | A | 18 September 2020 | None | | | |
| CN | 112529025 | A | 19 March 2021 | None | | | |
| CN | 113095045 | A | 09 July 2021 | None | | | |
| CN | 113298913 | A | 24 August 2021 | None | | | |
| US | 2021234687 | A1 | 29 July 2021 | JP | 2021121922 | A | 26 August 2021 |
|    |            |    |              | EP | 3975089 | A1 | 30 March 2022 |
|    |            |    |              | KR | 20220041704 | A | 01 April 2022 |
|    |            |    |              | CN | 111967615 | A | 20 November 2020 |

Form PCT/ISA/210 (patent family annex) (July 2022)

**REFERENCES CITED IN THE DESCRIPTION**

**Patent documents cited in the description**

• CN 202111564623